# EUROPÄISCHE PATENTSCHRIFT

(11) **EP 2 448 703 B1**
(45) Veröffentlichungstag und Bekanntmachung des Hinweises auf die Patenterteilung: **28.05.2014**
(21) Anmeldenummer: 10734650.4
(22) Anmeldetag: 11.06.2010
(51) Int. Cl.: B23B 31/12

(54) **Bohrvorrichtung**
Drilling device
Dispositif de perçage

(30) Priorität: 30.06.2009 DE 102009026075
(43) Veröffentlichungstag der Anmeldung: 09.05.2012
(73) Patentinhaber: Röhm GmbH, 89567 Sontheim/Brenz (DE)
(72) Erfinder: MACK, Hans-Dieter, 89567 Sontheim (DE)
(74) Vertreter: Hentrich, Swen
(86) Internationale Anmeldenummer: PCT/DE2010/075050
(87) Internationale Veröffentlichungsnummer: WO 2011/000370

(56) Entgegenhaltungen:
- EP-A2- 1 714 722
- WO-A2-2006/034287
- WO-A2-2006/113329
- WO-A2-2007/115157
- US-A- 4 317 578

## Beschreibung

Die Erfindung betrifft eine Bohrvorrichtung gemäß dem Oberbegriff des Anspruchs 1, bestehend aus einer Bohrmaschine, die eine in einem Maschinengehäuse drehbar gelagerte Bohrspindel aufweist, und aus einem Bohrfutter, das einen Futterkörper, einen koaxial zum Futterkörper verdrehbaren Spannkonus und einen Backenhalter aufweist, in dem in Führungsaufnahmen Spannbacken geführt sind, die radial verstellbar an einem Mitnehmer gelagert sind, der mit einem Gewindeabschnitt in eine zur Futterachse koaxiale, dem Futterkörper zugeordnete Gewindebuchse eingreift, wobei die Bohrspindel als Hohlspindel gestaltet ist, in der eine drehfest mit der Gewindebuchse verbundene Kupplungsstange eingreift, und wobei die Kupplungsstange verstellbar ist zwischen einer drehfest mit dem Maschinengehäuse gekuppelten Spannstellung und einer drehfest mit der Bohrspindel gekuppelten Bohrstellung.

Ferner betrifft die Erfindung eine Bohrvorrichtung gemäß dem Oberbegriff des Anspruchs 17, bestehend aus einer Bohrmaschine, die eine in einem Maschinengehäuse drehbar gelagerte Bohrspindel aufweist, und aus einem Bohrfutter, das einen Futterkörper , einen koaxial zum Futterkörper verdrehbaren Spannkonus und einen Backenhalter aufweist, in dem in Führungsaufnahmen Spannbacken geführt sind, die radial verstellbar an einem Mitnehmer gelagert sind, der mit einem Gewindeabschnitt in eine zur Futterachse koaxiale, dem Futterkörper zugeordnete Gewindebuchse eingreift, wobei die Bohrspindel als Hohlspindel gestaltet ist, in der eine drehfest mit dem Mitnehmer verbundene Kupplungsstange eingreift, und wobei die Kupplungsstange verstellbar ist zwischen einer drehfest mit dem Maschinengehäuse gekuppelten Spannstellung und einer drehfest mit der Bohrspindel gekuppelten Bohrstellung.

Aus Bohrmaschine und Bohrfutter bestehende Bohrvorrichtungen sind in der Praxis seit langem bekannt, wobei früher die Bohrmaschine ausschließlich zum drehenden Antreiben des Bohrfutters gedacht war, während das Öffnen und Schließen des Bohrfutters mittels eines Bohrfutterschlüssels bewirkt werden musste. Die weitere technische Entwicklung führte dann zu schlüssellos zu betätigenden Bohrfuttern, bei denen von Hand eine Spannhülse relativ zu dem drehfest an der Bohrspindel befestigten Futterkörper verdreht werden konnte, um ein Bohrwerkzeug zwischen den Spannbacken einzuspannen oder die Einspannung zu lösen. Darüber hinaus gibt es Bestrebungen, die Betätigung des Bohrfutters weiter zu vereinfachen, wozu bei Rundbackenfutter in der DE 10 2005 012 534 A1 vorgeschlagen ist, eine relativ zum Bohrfutter verstellbare Kupplungshülse einzusetzen, die gegenüber dem Maschinengehäuse gegen Mitdrehen gehalten ist und durch eine Kupplungseinrichtung mit der Spannhülse kraftschlüssig verbunden werden kann.

Aus der EP 1 714 722 A2 ist eine Bohrvorrichtung gemäß dem Oberbegriff des Anspruchs 1 bekannt, bei der eine Schalthülse vorgesehen ist, welcher über (radial angeordnete) Verzahnungen an ihrer Innen- und ihrer Außenseite verfügt. Die Schalthülse ist mit ihrer Außenverzahnung permanent drehfest gegenüber dem Maschinengehäuse festgelegt und kann manuell in ihrer axialen Lage verstellt werden. Die Innenverzahnung der Schalthülse ist in einer Bohrkonfiguration drehfest mit dem Antrieb der Bohrmaschine, mit einer Radialverzahnung eines drehfest mit der Gewindebuchse verbundenen Kupplungsbolzens und mit der Radialverzahnung der Bohrspindel verbunden. In einer Spannkonfiguration ist die Spannhülse nur drehfest mit der Radialverzahnung der Bohrspindel angeordnet und ermöglicht dadurch eine Relativdrehung der Bohrspindel bezüglich des Kupplungsbolzens. In der Spannkonfiguration ist somit eine Relativdrehung zwischen der drehfest mit dem Mitnehmer verbundenen Bohrspindel und der den Mitnehmer umgebenden Gewindehülse möglich, wodurch die Spannbacken gespannt bzw. gelöst werden können. Die hier gewählte Realisation der Verstellmöglichkeit zwischen einer Spann- und einer Bohrkonfiguration ist sehr komplex und aufwändig in deren Fertigung gestaltet.

Eine weitere Bohrvorrichtung gemäß dem Oberbegriff des Anspruchs 17 ist aus der WO 2006/034 287 A2 bekannt, wobei der Kupplungsbolzen hierbei mit dem Mitnehmer unmittelbar drehfest verbunden ist. Auch hier ist eine aufwändige Konstruktion gewählt, um eine Bohrvorrichtung bereitzustellen, die zwischen einer Spannkonfiguration und einer Bohrkonfiguration verstellbar ist.

Der Erfindung liegt die Aufgabe zugrunde, bei den Bohrvorrichtungen der eingangs genannten Art einen möglichst einfachen Aufbau bereitzustellen und eine vereinfachte Betätigung zu ermöglichen.

Diese Aufgabe wird bei den Bohrvorrichtungen der eingangs genannten Art durch die kennzeichnenden Merkmale der Ansprüche 1 und 17 gelöst, wobei die Kupplungsstange an ihrem axial der Gewindebuchse abgewandten Ende eine Kupplungsscheibe aufweist, die in der Spannstellung dem Maschinengehäuse und in der Bohrstellung der Bohrspindel anliegt, und wobei die Kupplungsscheibe als Teil der Kupplungsstange auf dieser zwischen der Spannstellung und der Bohrstellung verstellbar ist.

Diese Bohrvorrichtungen zeichnen sich dadurch aus, dass das Bohrfutter einen sehr einfachen Aufbau aufweist, der kostengünstig zu fertigen und zu montieren ist, da die Eingriffe zur Modifikation der Bohrvorrichtung auf Seiten der Bohrmaschine ausgeführt werden. Diese Eingriffe sind allerdings sehr einfach und beanspruchen sehr wenig Platz, so dass eine Integration in bestehende Maschinengehäuse möglich ist, also für die Bereitstellung der zusätzlichen Funktion des automatisierten Spannens und Lösens keine voluminösen Maschinengehäuse erforderlich sind; das manuelle Öffnen und Schließen des Bohrfutters bleibt gleichwohl möglich. Darüber hinaus ist zu beachten, dass nachspannende Bohrfutter die Tendenz haben, sich im Bohrbetrieb fester zu schließen, also das Bohrwerkzeug stärker einzuspannen bzw. im Linkslauf die Einspannung zu lösen. Dieses unerwünschte Verhalten wird bei der Erfindung durch die Kopplung der Bohrspindel mit der Kupplungsstange und damit dem Mitnehmer in der Bohrstellung unterbunden.

Der Vollständigkeit halber wird erwähnt, dass die Spannstellung ihren Namen durch die Beeinflussung des Spannzustandes des Werkzeuges erhalten hat, also in der Spannstellung sowohl das Einspannen als auch das Lösen des Werkzeuges erfolgen kann.

Erfindungswesentlich ist es, wenn die Kupplungsstange an ihrem axial der Gewindebuchse abgewandten Ende eine Kupplungsscheibe aufweist, die in der Spannstellung dem Maschinengehäuse und in der Bohrstellung der Bohrspindel anliegt. Durch diese Kupplungsscheibe wird eine vergrößerte Anlagefläche bereitgestellt, um eine sichere drehschlüssige Verbindung der Kupplungsstange einerseits mit dem Maschinengehäuse, andererseits mit der Bohrspindel bereitstellen zu können. Als vorteilhaft hat es sich dabei erwiesen, wenn die Kupplungsscheibe auf mindestens einer ihrer Planseiten, vorzugsweise auf beiden Planseiten eine Stirnverzahnung zum Zusammenwirken mit einer Gegenverzahnung aufweist, da so eine drehfeste Verbindung mittels eines Formschlusses generiert wird, die gleichwohl bei Überschreiten eines vorbestimmten Drehmomentes ohne eine Zerstörung der beteiligten Bauteile ein Ratschen der Stirnverzahnung über die Gegenverzahnung ermöglicht.

Bei der Erfindung ist weiterhin vorgesehen, dass die Kupplungsscheibe als Teil der Kupplungsstange auf dieser zwischen der Spannstellung und der Bohrstellung verstellbar ist. Es besteht also nicht die zwingende Notwendigkeit, die gesamte Kupplungsstange innerhalb des Maschinengehäuses und relativ zur Gewindebuchse zu verstellen, da auch eine Verstellung eines Teils der Kupplungsstange, nämlich der Kupplungsscheibe ausreicht, um das wechselweise Zusammenwirken mit dem Maschinengehäuse in der Spannstellung oder der Bohrspindel in der Bohrstellung zu gewährleisten.

Um die Sicherheit während des Bohrbetriebes zu erhöhen, ist zwischen dem Maschinengehäuse und der Kupplungsstange eine die Kupplungsstange in Richtung der Bohrspindel beaufschlagende Feder angeordnet, die die drehschlüssige Verbindung der Kupplungsstange gegenüber der Bohrspindel sicherstellt, so dass garantiert ist, dass der Mitnehmer sich gemeinsam mit dem Futterkörper verdreht.

Weiterhin bevorzugt im Rahmen der Erfindung ist es, wenn am Maschinengehäuse von außen zugänglich ein Schalter zur Verstellung der Kupplungsstange angeordnet ist, wobei dieser Schalter rein mechanisch oder elektrisch/magnetisch auf die Stellung der Kupplungsstange einwirken kann. Sofern der Schalter dem Antriebssystem der kraftbetätigten Bohrmaschine zugeordnet ist, besteht die Möglichkeit, dass in der Spannstellung der Schalter zur Beeinflussung der Drehzahl der Bohrmaschine in Sinne einer Begrenzung vorgesehen ist.

Ein einfacher mechanischer Aufbau zeichnet sich dadurch aus, dass der Kupplungsstange eine Steuerkurve zugeordnet ist zur Verstellung mittels einer an dem Schalter ausgebildeten Steuerfläche. Dabei hat es sich als günstig erwiesen, wenn der Schalter als Druckschalter mit einer den Druckschalter in die der Bohrstellung entsprechenden Ruhelage verstellenden Feder ausgebildet ist, also durch den Nutzer eine aktive Betätigung des Druckschalters erforderlich ist, um die Kupplungsstange in die Spannstellung zu verstellen. Durch diese Auslegung ist die sichere Einspannung des Bohrwerkzeuges während des Bohrbetriebes durch Gewährleistung der Beibehaltung der Bohrstellung gegeben.

Um in der Spannstellung eine permanente Einwirkung des Nutzers auf den Druckschalter entbehrlich zu machen, besteht die Möglichkeit, dass dem Druckschalter ein Schieber zur Festlegung seiner aus der Ruhelage ausgelenkten Lage zugeordnet ist.

Als vorteilhaft hat es sich weiterhin erwiesen, wenn am Druckschalter eine Rastaufnahme und am Maschinengehäuse ein Raststift vorgesehen ist, der mittels eines Schaltstiftes verstellbar ist. Zur Erhöhung der Betriebssicherung ist dabei die Gestaltung so getroffen, dass der Schaltstift mittels einer Schaltfeder in Richtung der Rastaufnahme beaufschlagt ist.

Die durch das Öffnen und Spannen des Bohrfutters auftretenden zusätzlichen Belastungen werden berücksichtigt, indem im Maschinengehäuse im Bereich der Kupplungsscheibe und des Schalters ein Stabilitätsskelett ausgebildet ist.

Statt der mechanischen Verstellung der Kupplungsstange mittels des Schalters/Druckschalters besteht gleichfalls die Möglichkeit, dass die Kupplungsstange aus einem magnetischen Material gebildet und im Maschinengehäuse ein mittels des Schalters betätigbarer Elektromagnet angeordnet.

Die drehfeste Verbindung zwischen der Kupplungsstange und der Gewindebuchse lässt sich in einfacher Weise dadurch erzielen, dass die Gewindebuchse in ihrem der Kupplungsstange zugewandten Buchsenboden eine nicht kreisrunde Öffnung aufweist, in die die Kupplungsstange mit korrespondierendem Querschnitt eingreift. Selbstverständlich besteht dann auch die Möglichkeit, dass nicht die Gewindebuchse die Kupplungsstange, sondern die Kupplungsstange mit korrespondierender Gestaltung die Gewindebuchse umgreift. Durch die erhöhte Integration des Bohrfutters mit der Bohrmaschine in der Bohrvorrichtung ergibt sich auch die Möglichkeit, die Bohrspindel einstückig mit dem Futterkörper auszubilden, wodurch sich wiederum Vorteile bei der Fertigung und der Montage ergeben, da weniger Bauteile gehandhabt werden müssen.

Im folgenden wird die Erfindung an in der Zeichnung dargestellten Ausführungsbeispielen näher erläutert; es zeigen:
- Fig. 1: einen Längsschnitt durch eine erfindungsgemäße Bohrvorrichtung,
- Fig. 2: eine der Figur 1 entsprechenden Darstellung einer alternative nAusführungsform mit geänderter Lagerung der Bohrspindel,
- Fig. 3: eine der Figur 1 entsprechende Darstellung einer nochmals anderen Ausführungsform mit geänderter Spindellagerung.
- Fig. 4: einen Längsschnitt durch die isolierte Darstellung eines Bohrfutter mit den zur Zusammenwirkung vorgesehenen Bauteilen der Bohrmaschine,
- Fig. 5: einen Längsschnitt zur Zusammenwirkung der Kupplungsstange mit dem Maschinengehäuse unter Verwendung magnetischer Kräfte,
- Fig. 6: eine der Figur 5 entsprechende Darstellung mit auf der Kupplungsstange axial verschiebbaren Kupplungsscheibe.
- Fig. 7: eine der Figur 5 entsprechende Darstellung mit einem im Maschinengehäuse gelagerten Druckschalter zur axialen Verstellung der Kupplungsscheibe,
- Fig. 8: eine der Figur 7 entsprechende Darstellung einer alternativen Ausführungsform mit einem Schieber zu Betätigung des Druckschalters,
- Fig. 9: eine der Figur 5 entsprechende Darstellung einer alternativen Ausführungsform hinsichtlich des Schalters,
- Fig. 10: eine der Figur 5 entsprechende Darstellung einer Ausführungsform mit einem im Maschinengehäuse angeordneten Stabilitätsskelett sowie einem dem Druckschalter zugeordneten Raststift mit einem Schaltstift,
- Fig. 11: eine Seitenansicht einer erfindungsgemäßen Bohrvorrichtung in Form eines Akku-Bohrschraubers, teilweise im Schnitt dargestellt,
- Fig. 12: eine der Figur 11 entsprechende Darstellung mit einem Druckschalter gemäß Figur 7, teilweise im Schnitt dargestellt, und
- Fig. 13: eine der Figur 3 entsprechende Darstellung einer Ausführungsform mit einstückig mit dem Futterkörper ausgebildeten Gewindebuchse, die drehschlüssig unmittelbar mit der Kupplungsstange verbunden ist.

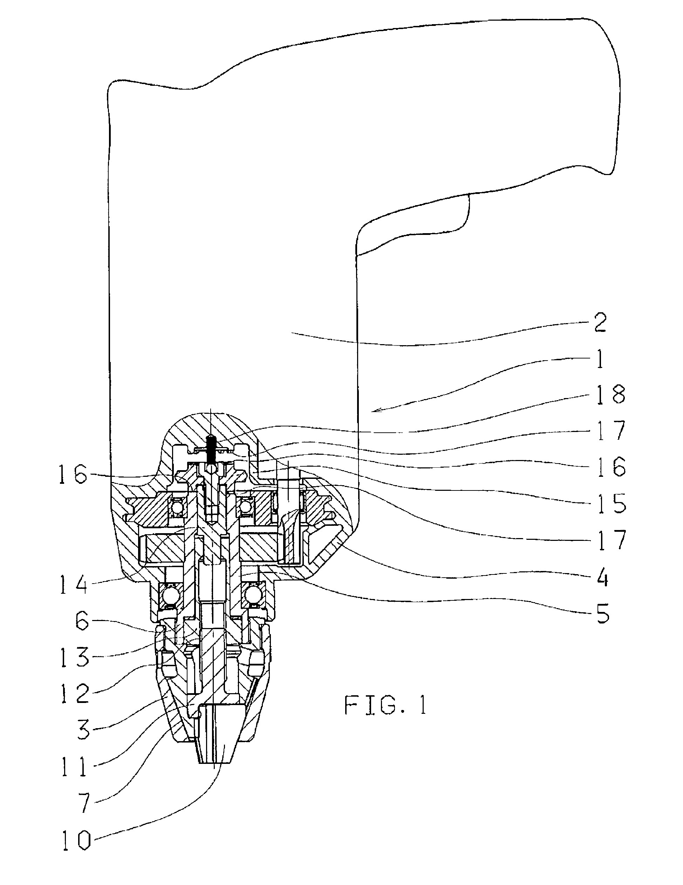

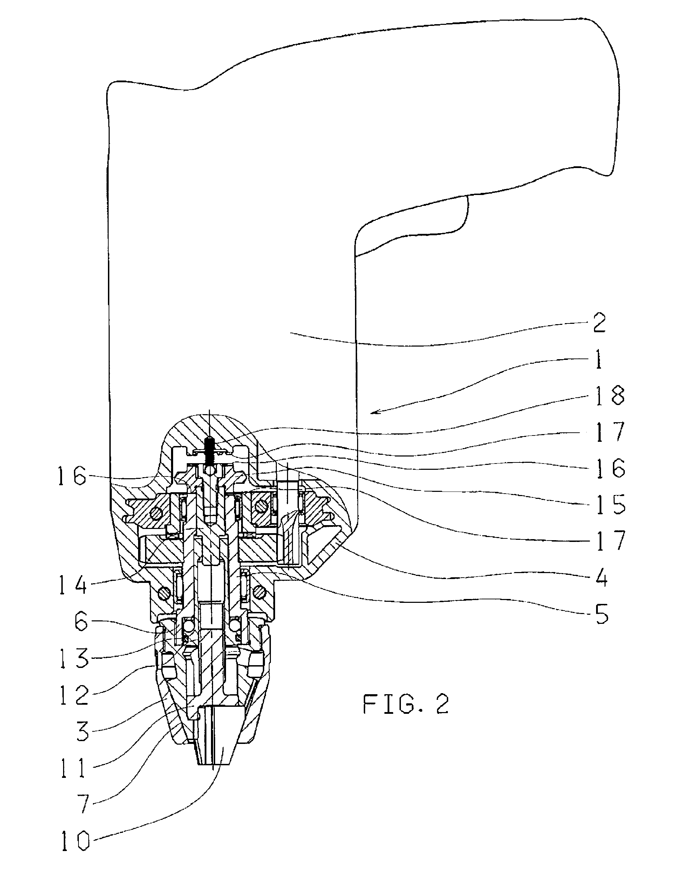

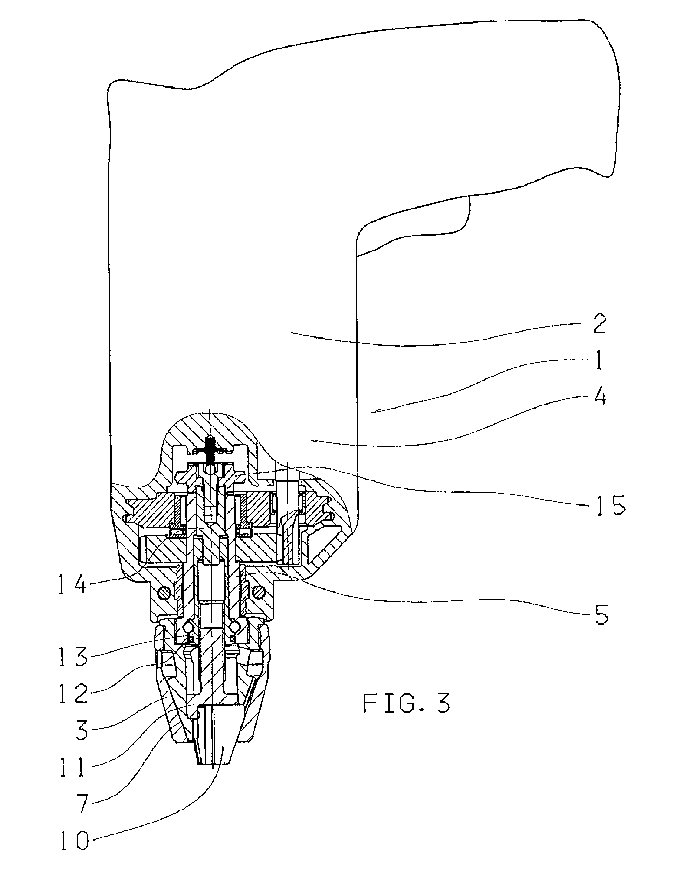

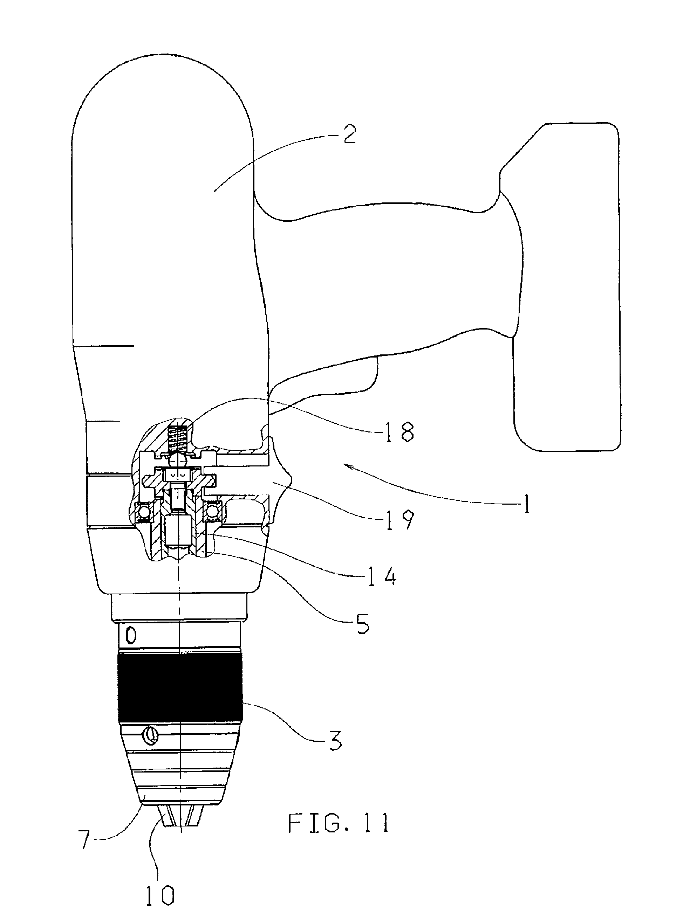

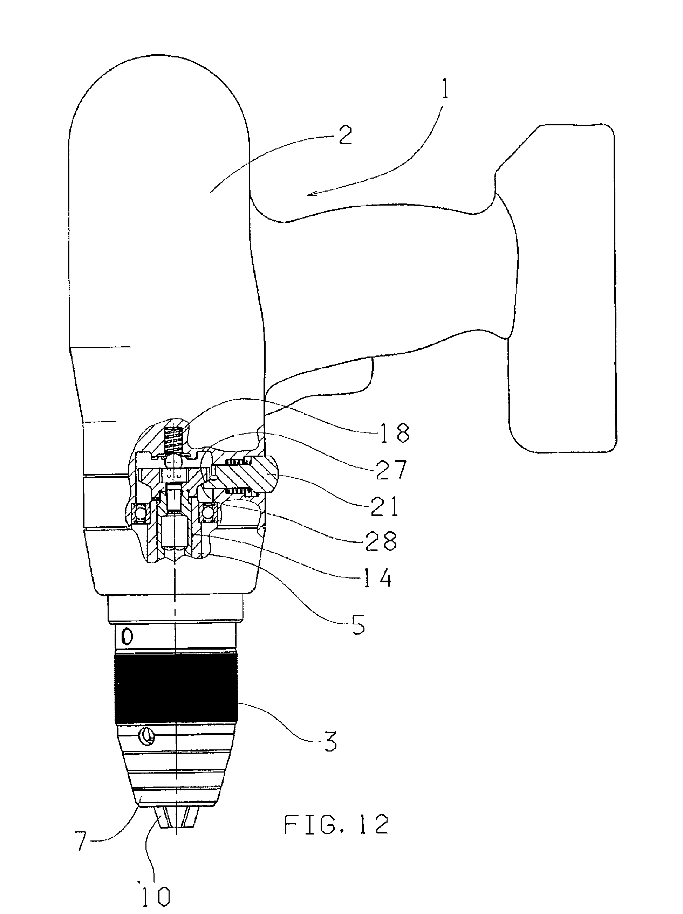

In den Zeichnungen sind Bohrvorrichtungen 1 dargestellt, die aus einer Bohrmaschine 2 und einem Bohrfutter 3 bestehen. Die Bohrmaschine 2 weist ein Maschinengehäuse 4 auf, in dem drehbar eine Bohrspindel 5 gelagert ist, die drehend antreibbar ist, in der Regel durch einen Elektromotor. Die Figuren 1 bis 3 zeigen dabei kabelgebundene Bohrvorrichtungen 1, während in den Figuren 11 und 12 akkubetriebene Bohrvorrichtungen 1 gezeigt sind. Bei der erfindungsgemäßen Bohrvorrichtung ist 1 das Bohrfutter 3 als ein nachspannendes Flachbacken-Bohrfutter gestaltet, das einen Futterkörper 6, einen koaxial zum Futterkörper 6 verdrehbaren Spannkonus 7 und einen Backenhalter 8 aufweist, in dem in Führungsaufnahmen 9 Spannbacken 10 geführt sind, die radial verstellbar an einem Mitnehmer 11 gelagert ist. Dieser Mitnehmer 11 greift mit einem Gewindeabschnitt 12 in eine zur Futterachse koaxiale, dem Futterkörper 6 zugeordnete Gewindebuchse 13 ein. Die Gewindebuchse 13 kann einstückig gegenüber dem Futterkörper 6 oder getrennt ausgebildet sein. Bei einer Verdrehung des Mitnehmers 11 in der Gewindebuchse 13 relativ zum Futterkörper 6 verstellt sich der Mitnehmer 11 axial, wodurch die Spannbacken 10 in den geneigt zur Futterachse verlaufenden Führungsaufnahmen 9 des Backenhalters 8 verschoben werden und sich dadurch auch radial verstellen, um so, je nach Drehsinn des Mitnehmers 11, ein Öffnen und Schließen des Bohrfutters 3 zu ermöglichen.

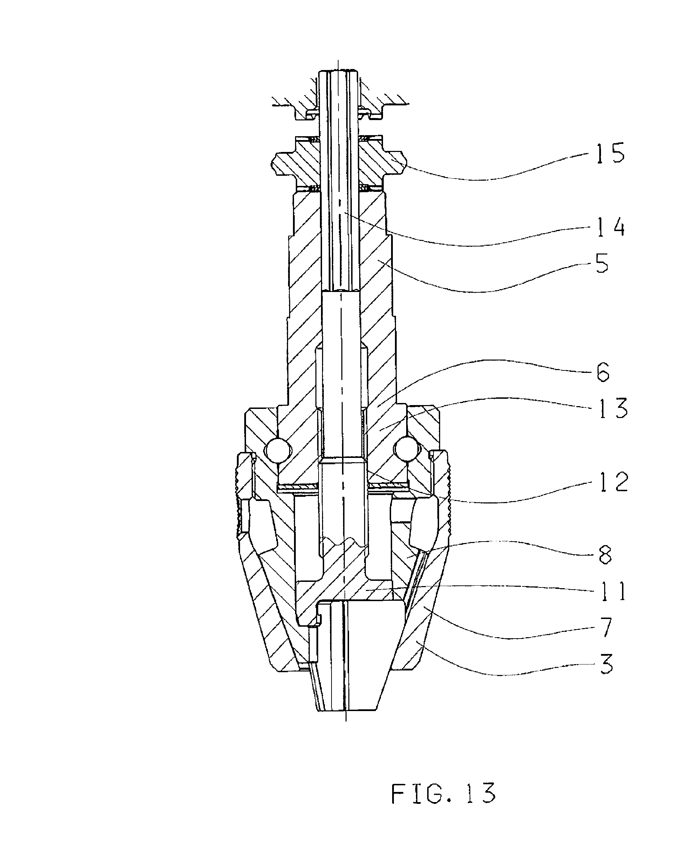

Um dieses Öffnen und Schließen für den Nutzer zu vereinfachen, ist die Nutzung des Motors der Bohrmaschine 2 vorgesehen. Dies wird realisiert, indem die Bohrspindel 5 als Hohlspindel gestaltet ist, in der eine drehfest mit der Gewindebuchse 13 verbundene Kupplungstange 14 eingreift, wobei die Kupplungsstange 14 verstellbar ist zwischen einer drehfest mit dem Maschinengehäuse 4 gekuppelten Spannstellung und einer drehfest mit der Bohrspindel 5 gekoppelten Bohrstellung. Befindet sich die Kupplungsstange 14 in der Spannstellung, ist die Drehlage der Kupplungsstange 14 durch das Maschinengehäuse 4 als Bezugssystem festgelegt, so dass bei einem Antrieb der Bohrspindel 5 der Futterkörper 6 mit dem Spannkonus 7 und dem Backenhalter 8 verdreht wird, was dazu führt, dass der Mitnehmer 11 in der Gewindebuchse 12 spindelt und die Drehung der Bohrspindel 5 in eine Verstellung der Spannbacken 10 in ihren Führungsaufnahmen 9 umsetzt. In der Bohrstellung ist die Kupplungsstange 14 mit der Bohrspindel 5 drehfest gekuppelt, so dass im Bohrbetrieb die Lage der Spannbacken 10 festgelegt ist und eine Lockerung der Einspannung nicht erfolgen kann. Bei einstückiger Ausbildung der Gewindebuchse 13 mit dem Futterkörper 6 ist die Kupplungsstange 14 drehfest mit dem Mitnehmer 11 gekoppelt (Fig. 13), während andernfalls die Kopplung über die separate Gewindebuchse 13 erfolgt.

Um das Zusammenwirken der Kupplungsstange 14 mit dem Maschinengehäuse 4 einerseits und der Bohrspindel 5 andererseits zu vereinfachen, ist an dem der Gewindebuchse 13 abgewandten Ende der Kupplungsstange 14 eine Kupplungsscheibe 15 ausgebildet, die in der Spannstellung dem Maschinengehäuse 4 und in der Bohrstellung der Bohrspindel 5 anliegt. Die Kupplungsscheibe 15 weist dabei bei dem in der Zeichnung dargestellten Ausführungsbeispiel auf beiden Seiten jeweils eine Stirnverzahnung 16 zum Zusammenwirken mit Gegenverzahnungen 17 des Maschinengehäuses 4 und der Bohrspindel 5 auf, die im übrigen zur Vereinfachung des Gesamtaufbaus der Bohrvorrichtung einstückig mit dem Futterkörper 5 des Bohrfutters 3 ausgestaltet sein kann.

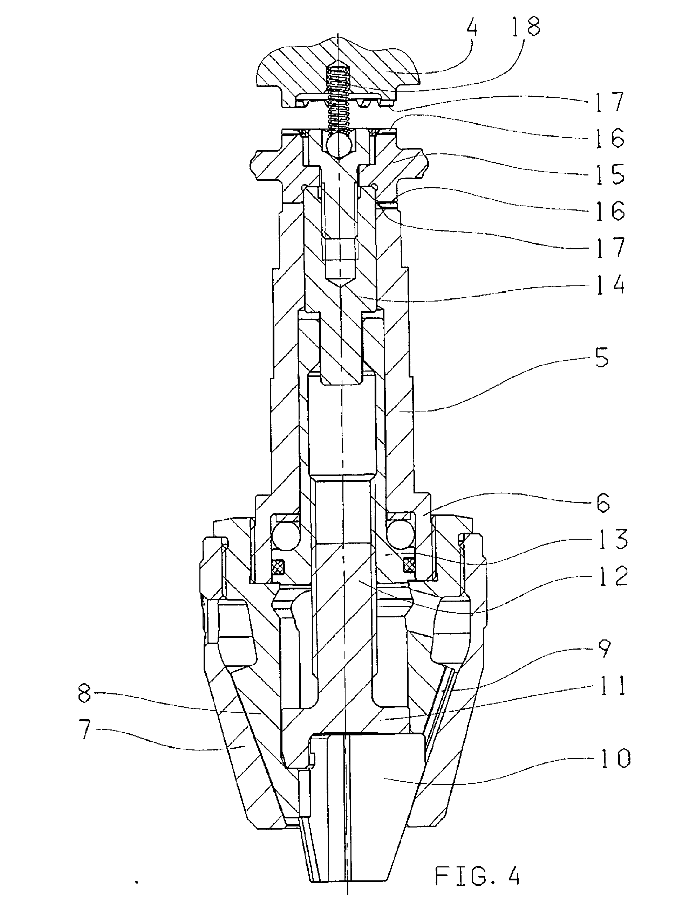

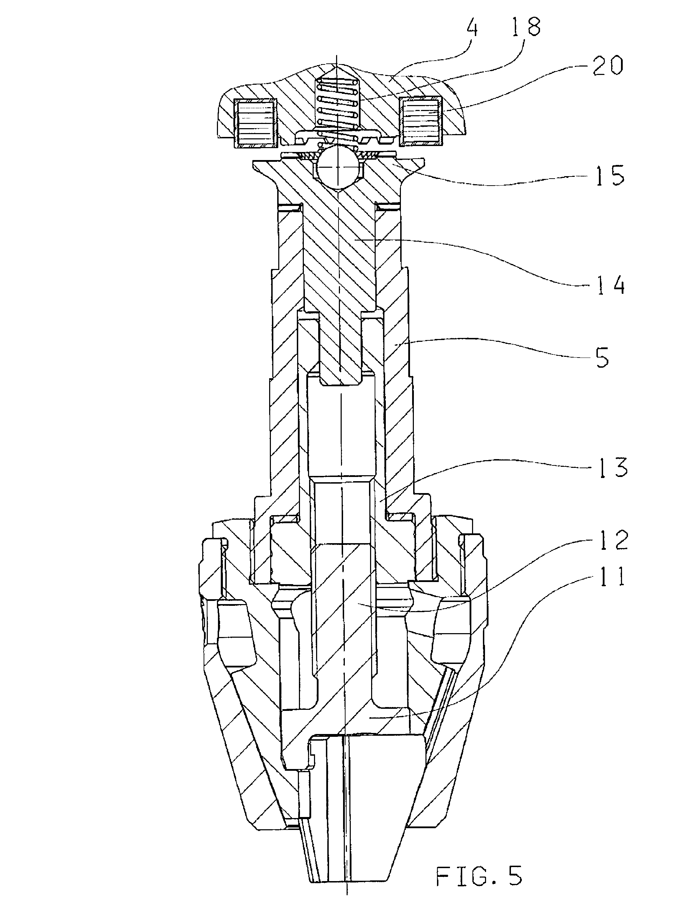

In den Figuren 4 und 5 sind Ausführungsbeispiele gezeigt, bei denen die Kupplungsstange 14 mit der Kupplungsscheibe 15 insgesamt relativ zu der Gewindebuchse 13 und dem Mitnehmer 11 verstellt wird; die erforderliche axiale Verstellung zum Schalten zwischen der Bohrstellung und der Spannstellung lässt sich dabei aber auch generieren, indem lediglich die Kupplungsscheibe 15 als Teil der Kupplungsstange 14 auf dieser zwischen der Spannstellung und der Bohrstellung verstellt wird. Die drehfeste Verbindung der Kupplungsstange 14 mit der Gewindebuchse 13 erfolgt bei den in der Zeichnung dargestellten Ausführungsbeispielen, indem die Gewindebuchse 13 in ihrem der Kupplungstange 14 zugewandten Büchsenboden eine nicht kreisrunde Öffnung aufweist, in die die Kupplungsstange 14 mit korrespondierendem Querschnitt eingreift, also beispielsweise an dem betreffenden Ende der Kupplungsstange 14 ein Sechskant zum Zusammenwirken mit einer Sechskantaufnahme der Gewindebuchse 13 ausgestaltet ist und damit die Kupplungsstange 14 außenseitig von der Gewindebuchse 13 umgriffen ist. Denkbar ist es selbstverständlich auch, dass die Kupplungsstange 14 die Gewindebuchse 13 außenseitig umgreift.

Ebenfalls zur Erhöhung der Sicherheit im Bohrbetrieb dient eine zwischen dem Maschinengehäuse 4 und der Kupplungsstange 14 angeordnete Feder 18, die die Kupplungsstange 14 in Richtung der Bohrstellung beaufschlagt.

Der Übergang aus dieser Bohrstellung in die Spannstellung erfordert eine Verschiebung der Kupplungsstange 14 relativ zu der Bohrspindel 5 und zu dem Maschinengehäuse 4 unter der Kontrolle des Nutzers der Bohrvorrichtung 1. Dazu ist am Maschinengehäuse 4 ein von außen zugänglicher Schalter 19 vorgesehen, der neben der rein mechanischen Verstellung der Kupplungsstange 14 selbstverständlich zugleich auch auf das Antriebssystem einwirken kann im Sinne einer Begrenzung der Drehzahl, um so einen hochtourigen Betrieb der Bohrvorrichtung 1 zum Öffnen und Schließen des Bohrfutters 3 zu vermeiden.

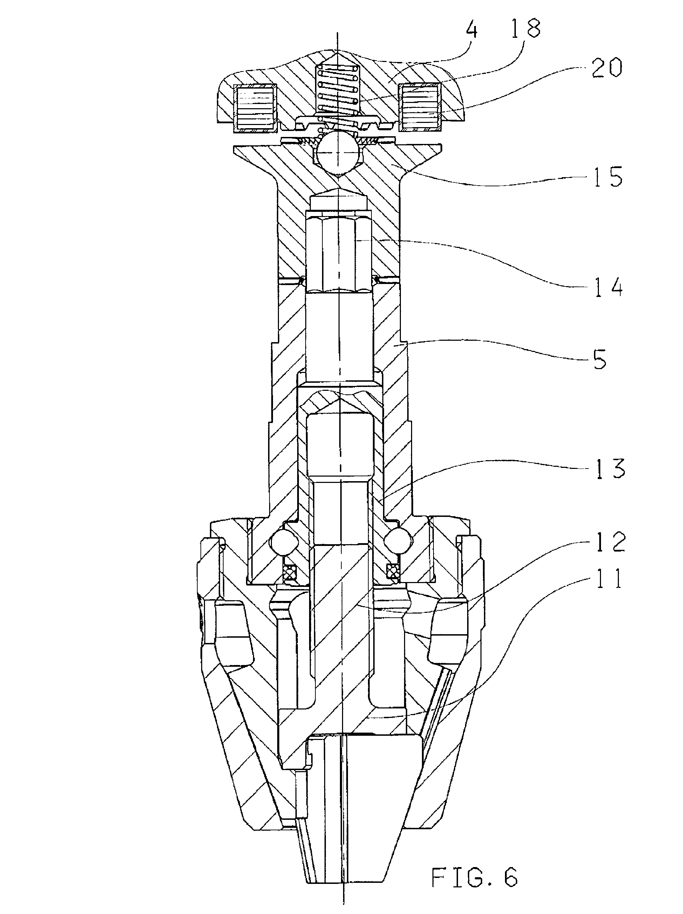

Die Figuren 5 und 6 zeigen Ausführungsformen, bei denen zur Verstellung der Kupplungsstange 14 ein Elektromagnet 20 vorgesehen ist, der zweckmäßigerweise dem Maschinengehäuse 4 zugeordnet ist, während die Kupplungsstange 14 aus einem magnetischen Material besteht. Der Schalter 19 dient dann zum Ein- und Ausschalten des Elektromagneten 20.

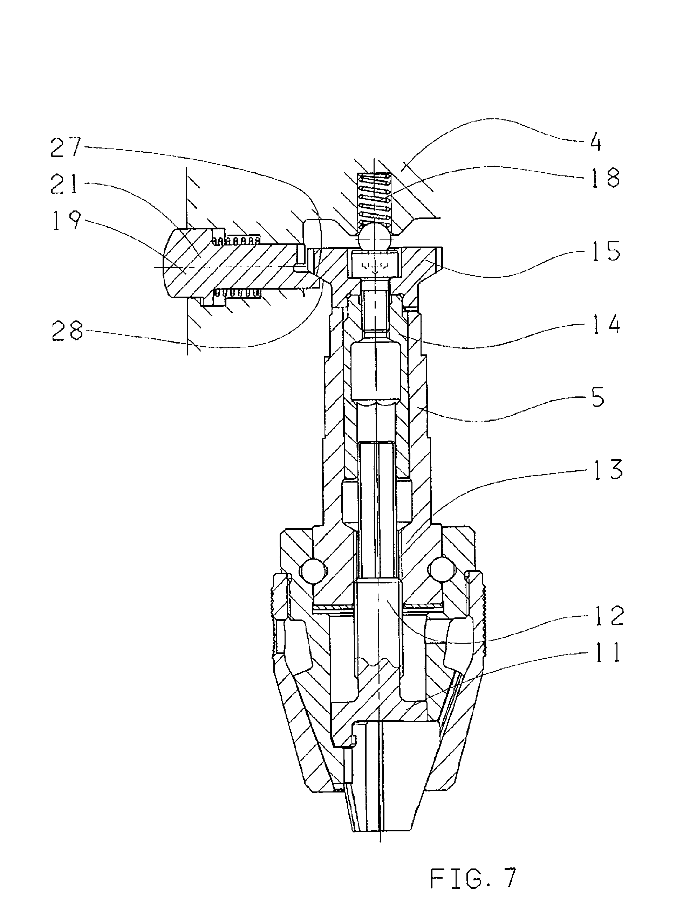

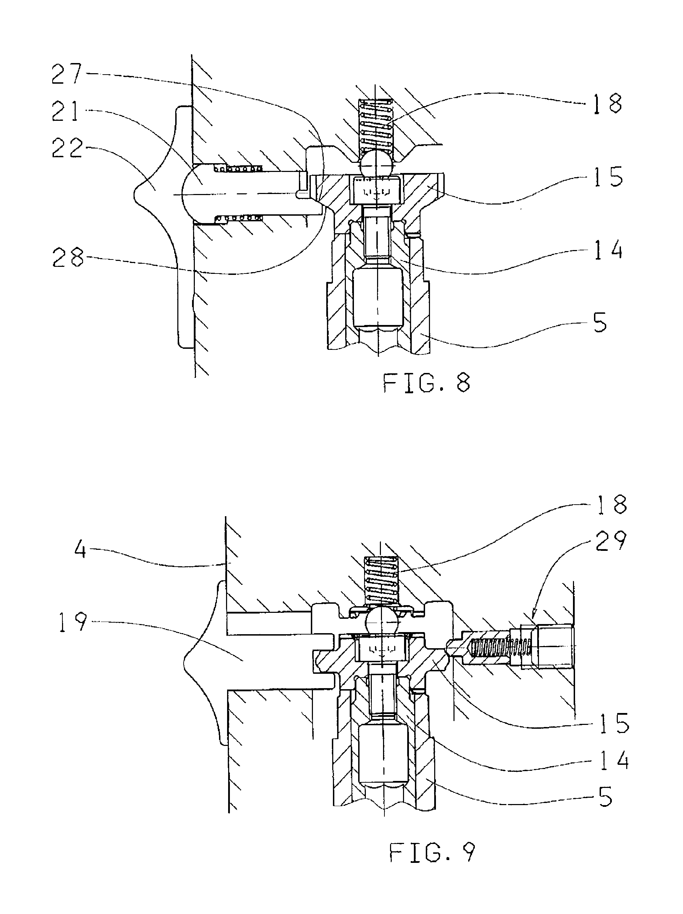

Alternativ besteht auch die in der Figur 7 gezeigte Möglichkeit einer rein mechanischen Verstellung der Kupplungsstange 14 mittels eines als Druckschalter 21 ausgestalteten Schalters 19, der von einer den Druckschalter 21 in die der Bohrstellung entsprechenden Ruhelage verstellbare Feder beaufschlagt ist. Bei der in der Figur 7 gezeigten Ausführungsform kann der Nutzer damit den Druckschalter 21 niederdrücken und so die Kupplungsstange 14 axial nach hinten in die Spannstellung verstellen und dann mittels des Antriebs der Bohrspindel 5 die Verdrehung des Mitnehmers 11 bewirken. Um dabei dem Nutzer eine gleichzeitige Betätigung des Druckschalters 21 und des Bohrspindelantriebs zu ersparen, besteht die in der Figur 8 gezeigte Möglichkeit, dem Druckschalter 21 einen Schieber 22zur Festlegung seiner aus der Ruhelage ausgelenkten Lage zuzuordnen.

Figur 9 zeigt eine Ausführungsform, bei der der Schalter 19 unmittelbar als Schiebeglied ausgestaltet, dem zweckmäßigerweise zwei Rastpositionen korrespondierend zur Bohrstellung und zur Spannstellung zugeordnet sind.

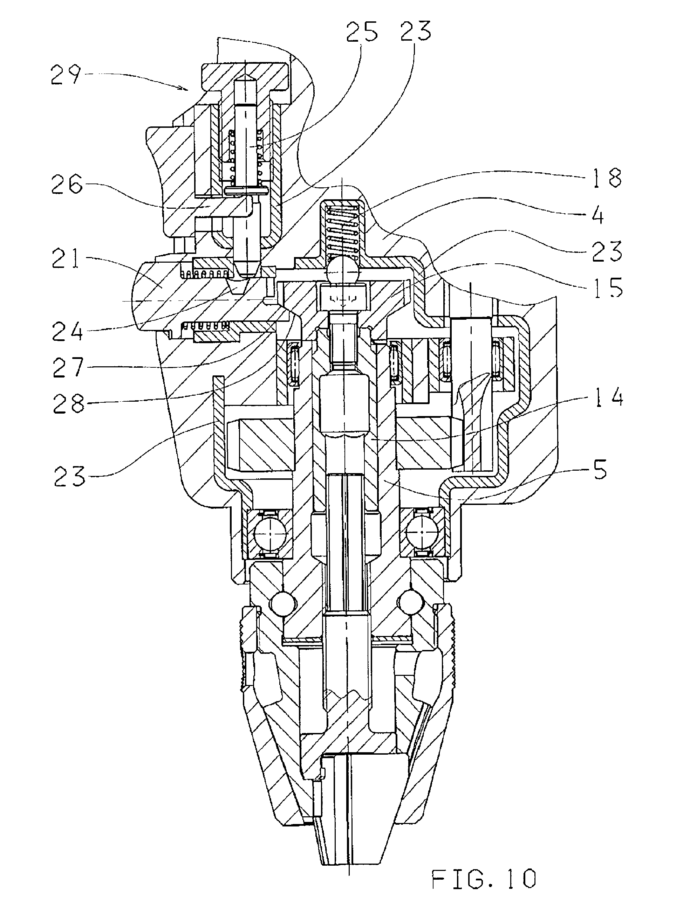

Die Figur 10 zeigt eine Ausführungsform, bei der im Maschinengehäuse 4 ein Stabilitätsskelett 23 ausgebildet ist, um die höhere Belastung des in der Regel aus Kunststoff gefertigten Maschinengehäuses 4 im Hinblick auf die Betätigung der Kupplungsstange 14 berücksichtigen zu können. Dieses Stabilitätsskelett 23 kann aus einem härteren Kunststoff oder aus Metall bestehen. Bei diesem in der Figur 10 gezeigten Ausführungsbeispiel ist im Druckschalter 21 eine Rastaufnahme 24 und am Maschinengehäuse 4 ein Raststift 25 vorgesehen, der mittels eines Schaltstiftes 26 verstellbar ist; der Raststift 25 ist mittels einer Rastfeder in Richtung der Rastaufnahme 24 beaufschlagt, deren Vorspannung einstellbar ist. Mittels eines Drehmomentbegrenzers 29 wird also bei Überschreiten eines einstellbaren Drehmoments der Raststift 25 verstellt und durch den Druckschalter 21 freigegeben. Der Nutzer hat also auch hier die Möglichkeit, zunächst den Druckschalter 21 zu betätigen und die Spannstellung der Kupplungsstange 14 einzustellen, wobei diese Stellung beibehalten bleibt durch das Zusammenwirken des federbeaufschlagten Raststiftes 25 mit der Rastaufnahme 24 des Druckschalters 21. Der Nutzer kann dann mittels des Antriebes der Bohrmaschine 2 die Verdrehung der Bohrspindel 5 und damit das Öffnen und Schließen des Bohrfutters 3 bewirken. Nach erfolgter Verstellung der Spannbacken 10 wird der Schaltstift 26 betätigt und unter der Wirkung der Feder 18 die Kupplungsstange 14 in die Bohrstellung verstellt, oder der Drehmomentbegrenzer 29 spricht an und bewirkt diese Verstellung.

Die Figuren 11 und 12 veranschaulichen eine mögliche Integration des Schalters 15 bzw. Druckschalters 21 in das Maschinengehäuse in der Nähe des Drehwahlschalters, so dass für den Nutzer die Möglichkeit der Einhandbedienung besteht.

### Bezugszeichenliste

- 1: Bohrvorrichtung
- 2: Bohrmaschine
- 3: Bohrfutter
- 4: Maschinengehäuse
- 5: Bohrspindel
- 6: Futterkörper
- 7: Spannkonus
- 8: Backenhalter
- 9: Führungsaufnahmen
- 10: Spannbacken
- 11: Mitnehmer
- 12: Gewindeabschnitt
- 13: Gewindebuchse
- 14: Kupplungsstange
- 15: Kupplungsscheibe
- 16: Stirnverzahnung
- 17: Gegenverzahnung
- 18: Feder
- 19: Schalter
- 20: Elektromagnet
- 21: Druckschalter
- 22: Schieber
- 23: Stabilitätsskelett
- 24: Rastaufnahme
- 25: Raststift
- 26: Schaltstift
- 27: Steuerfläche
- 28: Steuerkurve
- 29: Drehmomentbegrenzer

## Patentansprüche

1. Bohrvorrichtung, bestehend aus einer Bohrmaschine (2), die eine in einem Maschinengehäuse (4) drehbar gelagerte Bohrspindel (5) aufweist, und aus einem Bohrfutter (3), das einen Futterkörper (6), einen koaxial zum Futterkörper (6) verdrehbaren Spannkonus (7) und einen Backenhalter (8) aufweist, in dem in Führungsaufnahmen (9) Spannbacken (10) geführt sind, die radial verstellbar an einem Mitnehmer (11) gelagert sind, der mit einem Gewindeabschnitt (12) in eine zur Futterachse koaxiale, dem Futterkörper (6) zugeordnete Gewindebuchse (13) eingreift, wobei die Bohrspindel (5) als Hohlspindel gestaltet ist, in der eine drehfest mit der Gewindebuchse (13) verbundene Kupplungsstange (14) eingreift, und wobei die Kupplungsstange (14) verstellbar zwischen einer drehfest mit dem Maschinengehäuse (4) gekuppelten Spannstellung und einer drehfest mit der Bohrspindel (5) gekuppelten Bohrstellung ist, **dadurch gekennzeichnet, dass** die Kupplungsstange (14) an ihrem axial der Gewindebuchse (13) abgewandten Ende eine Kupplungsscheibe (15) aufweist, die in der Spannstellung dem Maschinengehäuse (4) und in der Bohrstellung der Bohrspindel (5) anliegt, und dass die Kupplungsscheibe (15) als Teil der Kupplungsstange (14) auf dieser zwischen der Spannstellung und der Bohrstellung verstellbar ist.

2. Bohrvorrichtung nach Anspruch 1, **dadurch gekennzeichnet, dass** die Kupplungsscheibe (15) auf mindestens einer ihrer Planseiten, vorzugsweise auf beiden Planseiten eine Stirnverzahnung (16) zum Zusammenwirken mit einer Gegenverzahnung (17) aufweist.

3. Bohrvorrichtung nach Anspruch 1 oder 2, **dadurch gekennzeichnet, dass** zwischen dem Maschinengehäuse(4) und der Kupplungsstange (14) eine die Kupplungsstange (14) in Richtung der Bohrstellung beaufschlagende Feder (18) angeordnet ist.

4. Bohrvorrichtung nach einem der Ansprüche 1 bis 3, **dadurch gekennzeichnet, dass** am Maschinengehäuse (4) von außen zugänglich ein Schalter (19) zur Verstellung der Kupplungsstange (14) angeordnet ist.

5. Bohrvorrichtung nach Anspruch 4, **dadurch gekennzeichnet, dass** in der Spannstellung der Schalter (19) zur Beeinflussung der Drehzahl der Bohrmaschine (2) im Sinne einer Begrenzung vorgesehen ist.

6. Bohrvorrichtung nach Anspruch 4 oder 5, **dadurch gekennzeichnet, dass** der Kupplungsstange (14) eine Steuerkurve (28) zugeordnet ist zur Verstellung mittels einer an dem Schalter (19) ausgebildeten Steuerfläche (27).

7. Bohrvorrichtung nach Anspruch 6, **dadurch gekennzeichnet, dass** der Schalter (19) als Druckschalter (21) mit einer den Druckschalter (21) in die der Bohrstellung entsprechenden Ruhelage verstellenden Feder ausgebildet ist.

8. Bohrvorrichtung nach Anspruch 7, **dadurch gekennzeichnet, dass** dem Druckschalter(21) ein Schieber (22) zur Festlegung seiner aus der Ruhelage ausgelenkten Lage zugeordnet ist.

9. Bohrvorrichtung nach Anspruch 7 oder 8, **dadurch gekennzeichnet, dass** am Druckschalter (21) eine Rastaufnahme (24) und am Maschinengehäuse (4) ein Raststift (25) vorgesehen ist, der mittels eines Schaltstiftes (26) verstellbar ist.

10. Bohrvorrichtung nach Anspruch 9, **dadurch gekennzeichnet, dass** der Raststift (25) mittels einer Rastfeder in Richtung der Rastaufnahme (24) beaufschlagt ist.

11. Bohrvorrichtung nach einem der Ansprüche 7 bis 10, **dadurch gekennzeichnet, dass** im Maschinengehäuse (4) im Bereich der Kupplungsscheibe (15) und des Schalters (19) ein Stabilitätsskelett (23) ausgebildet ist.

12. Bohrvorrichtung nach einem der Ansprüche 4 bis 11, **dadurch gekennzeichnet, dass** die Kupplungsstange (14) aus einem magnetischen Material gebildet und im Maschinengehäuse (4) ein mittels des Schalters (19) betätigbarer Elektromagnet (20) angeordnet ist.

13. Bohrvorrichtung nach einem der Ansprüche 1 bis 12, **dadurch gekennzeichnet, dass** die Gewindebuchse (13) in ihrem der Kupplungsstange (14) zugewandten Buchsenboden eine nicht kreisrunde Öffnung aufweist, in die die Kupplungsstange mit korrespondierendem Querschnitt eingreift.

14. Bohrvorrichtung nach einem der Ansprüche 1 bis 13, **dadurch gekennzeichnet, dass** die Bohrspindel (5) einstückig mit dem Futterkörper (6) ausgebildet ist.

15. Bohrvorrichtung nach einem der Ansprüche 4 bis 14, **dadurch gekennzeichnet, dass** ein Drehmomentbegrenzer (29) zur Verstellung des Schalters (19) in die die Bohrstellung der Kupplungsstange (14) ermöglichende Position bei Überschreiten eines vorgegebenen Drehmomentes vorgesehen ist.

16. Bohrvorrichtung nach Anspruch 15, **dadurch gekennzeichnet, dass** das vorgegebene Drehmoment einstellbar ist.

17. Bohrvorrichtung, bestehend aus einer Bohrmaschine (2), die eine in einem Maschinengehäuse (4) drehbar gelagerte Bohrspindel (5) aufweist, und aus einem Bohrfutter (3), das einen Futterkörper (6), einen koaxial zum Futterkörper (6) verdrehbaren Spannkonus (7) und einen Backenhalter (8) aufweist, in dem in Führungsaufnahmen (9) Spannbacken (10) geführt sind, die radial verstellbar an einem Mitnehmer (11) gelagert sind, der mit einem Gewindeabschnitt (12) in eine zur Futterachse koaxiale, dem Futterkörper (6) zugeordnete Gewindebuchse (13) eingreift, wobei der Futterkörper (6) einstückig mit der Gewindebuchse (13) ausgebildet ist, wobei die Bohrspindel (5) als Hohlspindel gestaltet ist, in der eine drehfest mit dem Mitnehmer (11) verbundene Kupplungsstange (14) eingreift, wobei die Kupplungsstange (14) verstellbar zwischen einer drehfest mit dem Maschinengehäuse (4) gekuppelten Spannstellung und einer drehfest mit der Bohrspindel (5) gekuppelten Bohrstellung ist, und wobei die Kupplungsstange (14) an ihrem axial der Gewindebuchse (13) abgewandten Ende eine Kupplungsscheibe (15) aufweist, **dadurch gekennzeichnet, dass** die Kupplungstange in der Spannstellung dem Maschinengehäuse (4) und in der Bohrstellung der Bohrspindel (5) anliegt, und dass die Kupplungsscheibe (15) als Teil der Kupplungsstange (14) auf dieser zwischen der Spannstellung und der Bohrstellung verstellbar ist.

## Claims

1. A drilling apparatus comprising a drilling machine (2) having a drilling spindle (5) mounted rotatably in a machine housing (4), and a drilling chuck (3) having a chuck body (6), a clamping cone (7) rotatable coaxially relative to the chuck body (6), and a jaw holder (8) in which there are guided in guide receiving means (9) clamping jaws (10) which are mounted radially displaceably on an entrainment member (11) which engages with a thread portion (12) into a threaded sleeve (13) which is coaxial with respect to the chuck axis and which is associated with the chuck body (6), wherein the drilling spindle (5) is in the form of a hollow spindle in which a coupling rod (14) non-rotatably connected to the threaded sleeve (13) engages, and wherein the coupling rod (14) is displaceable between a clamping position coupled non-rotatably to the machine housing (4) and a drilling position coupled non-rotatably to the drilling spindle (5), **characterised in that** at its end axially remote from the threaded sleeve (13) the coupling rod (14) has a coupling disc (15) which bears against the machine housing (4) in the clamping position and against the drilling spindle (5) in the drilling position, and that the coupling disc (15) is displaceable as part of the coupling rod (14) on same between the clamping position and the drilling position.

2. A drilling apparatus according to claim 1 **characterised in that** on at least one of its flat sides and preferably on both flat sides the coupling disc (15) has a face tooth configuration (16) for co-operating with a counterpart tooth configuration (17).

3. A drilling apparatus according to claim 1 or claim 2 **characterised in that** arranged between the machine housing (4) and the coupling rod (14) is a spring (18) urging the coupling rod (14) in the direction of the drilling position.

4. A drilling apparatus according to one of claims 1 to 3 **characterised in that** arranged on the machine housing (4) and accessible from the exterior is a switch (19) for displacement of the coupling rod (14).

5. A drilling apparatus according to claim 4 **characterised in that** in the clamping position the switch (14) is provided to influence the speed of rotation of the drilling machine (2) in the sense of limiting same.

6. A drilling apparatus according to claim 4 or claim 5 **characterised in that** associated with the coupling rod (14) is a control cam (28) for displacement by means of a control surface (27) on the switch (19).

7. A drilling apparatus according to claim 6 **characterised in that** the switch (19) is in the form of a pushbutton switch (21) with a spring for displacing the pushbutton switch (21) into the rest position corresponding to the drilling position.

8. A drilling apparatus according to claim 7 **characterised in that** associated with the pushbutton switch (21) is a slider (22) for fixing its position of being deflected out of the rest position.

9. A drilling apparatus according to claim 7 or claim 8 **characterised in that** provided on the pushbutton switch (21) is a latching receiving means (24) and provided on the machine housing (4) is a latching pin (25) displaceable by means of a switching pin (26).

10. A drilling apparatus according to claim 9 **characterised in that** the latching pin (25) is urged by means of a latching spring in the direction of the latching receiving means (24).

11. A drilling apparatus according to one of claims 7 to 10 **characterised in that** a stability skeleton frame (23) is provided in the machine housing (4) in the region of the coupling disc (15) and the switch (19).

12. A drilling apparatus according to one of claims 4 to 11 **characterised in that** the coupling rod (14) is formed from a magnetic material and an electromagnet (20) actuable by means of the switch (19) is arranged in the machine housing (4).

13. A drilling apparatus according to one of claims 1 to 12 **characterised in that** in its sleeve bottom that is towards the coupling rod (14) the threaded sleeve (13) has a non-circular opening into which the coupling rod engages with a corresponding cross-section.

14. A drilling apparatus according to one of claims 1 to 13 **characterised in that** the drilling spindle (5) is in one piece with the chuck body (6).

15. A drilling apparatus according to one of claims 4 to 14 **characterised in that** there is provided a torque limiter (29) for displacing the switch (19) into the position permitting the drilling position of the coupling rod (14) when a predetermined torque is exceeded.

16. A drilling apparatus according to claim 15 **characterised in that** the predetermined torque is adjustable.

17. A drilling apparatus comprising a drilling machine (2) having a drilling spindle (5) mounted rotatably in a machine housing (4), and a drilling chuck (3) having a chuck body (6), a clamping cone (7) rotatable coaxially relative to the chuck body (6), and a jaw holder (8) in which there are guided in guide receiving means (9) clamping jaws (10) which are mounted radially displaceably on an entrainment member (11) which engages with a thread portion (12) into a threaded sleeve (13) which is coaxial with respect to the chuck axis and which is associated with the chuck body (6), wherein the chuck body (6) is in one piece with the threaded sleeve (13), wherein the drilling spindle (5) is in the form of a hollow spindle in which a coupling rod (14) non-rotatably connected to the entrainment member (11) engages, wherein the coupling rod (14) is displaceable between a clamping position coupled non-rotatably to the machine housing (4) and a drilling position coupled non-rotatably to the drilling spindle (5), and wherein at its end axially remote from the threaded sleeve (13) the coupling rod (14) has a coupling disc (15), **characterised in that** the coupling rod bears against the machine housing (4) in the clamping position and against the drilling spindle (5) in the drilling position, and that the coupling disc (15) is displaceable as part of the coupling rod (14) on same between the clamping position and the drilling position.

## Revendications

1. Dispositif de perçage, composé d'une perceuse (2), comportant une broche de perçage (5) montée à rotation dans un carter de machine (4), et d'un mandrin (3), comportant un corps de mandrin (6), un cône de serrage (7) pouvant tourner coaxialement au corps de mandrin (6) et un porte-mors (8) dans lequel des mors de serrage (10) guidés dans des logements de guidage (9) sont montés de manière déplaçable radialement sur un entraîneur (11) qui s'engage par une partie filetée (12) dans une douille filetée (13) coaxiale à l'axe du mandrin et associée au corps de mandrin (6), la broche de perçage (5) étant réalisée sous la forme d'une broche creuse dans laquelle s'engage une tige d'accouplement (14) liée en rotation avec la douille filetée (13), et la tige d'accouplement (14) étant déplaçable entre une position de serrage couplée en rotation avec le carter de machine (4) et une position de perçage couplée en rotation avec la broche de perçage (5), **caractérisé en ce que** la tige d'accouplement (14) comporte, à son extrémité éloignée axialement de la douille filetée (13), un disque d'accouplement (15) qui est appliqué, dans la position de serrage, contre le carter de machine (4) et, dans la position de perçage, contre la broche de perçage (5), et **en ce que** le disque d'accouplement (15) fait partie de la tige d'accouplement (14) et est déplaçable sur celle-ci entre la position de serrage et la position de perçage.

2. Dispositif de perçage selon la revendication 1, **caractérisé en ce que** le disque d'accouplement (15) comporte sur au moins une de ses faces planes, de préférence sur les deux faces planes, une denture frontale (16) prévue pour coopérer avec une denture complémentaire (17).

3. Dispositif de perçage selon la revendication 1 ou 2, **caractérisé en ce qu'**un ressort (18) sollicitant la tige d'accouplement (14) dans la direction de la position de perçage est disposé entre le carter de machine (4) et la tige d'accouplement (14).

4. Dispositif de perçage selon une des revendications 1 à 3, **caractérisé en ce qu'**un interrupteur (19) prévu pour déplacer la tige d'accouplement (14) est disposé sur le carter de machine (4) de manière accessible de l'extérieur.

5. Dispositif de perçage selon la revendication 4, **caractérisé en ce que** dans la position de serrage, l'interrupteur (19) est prévu pour agir sur la vitesse de rotation de la perceuse (2) en la limitant.

6. Dispositif de perçage selon la revendication 4 ou 5, **caractérisé en ce qu'**une came de commande (28) est associée à la tige d'accouplement (14) pour la déplacer au moyen d'une surface de commande (27) ménagée sur l'interrupteur (19).

7. Dispositif de perçage selon la revendication 6, **caractérisé en ce que** l'interrupteur (19) est réalisé sous la forme d'un interrupteur à poussoir (21) avec un ressort déplaçant l'interrupteur à poussoir (21) vers la position de repos correspondant à la position de perçage.

8. Dispositif de perçage selon la revendication 7, **caractérisé en ce qu'**un curseur (22) est associé à l'interrupteur à poussoir (21) pour définir sa position déviée de sa position de repos.

9. Dispositif de perçage selon la revendication 7 ou 8, **caractérisé en ce qu'**un logement de crantage (24) est prévu sur l'interrupteur à poussoir (21) et une tige de crantage (25), déplaçable au moyen d'une tige de commutation (26), est prévue sur le carter de machine (4).

10. Dispositif de perçage selon la revendication 9, **caractérisé en ce que** la tige de crantage (25) est sollicitée dans la direction du logement de crantage (24) au moyen d'un ressort de crantage.

11. Dispositif de perçage selon une des revendications 7 à 10, **caractérisé en ce qu'**une ossature de stabilité (23) est prévue dans le carter de machine (4) dans la région du disque d'accouplement (15) et de l'interrupteur (19).

12. Dispositif de perçage selon une des revendications 4 à 11, **caractérisé en ce que** la tige d'accouplement (14) est formée d'un matériau magnétique, et un électroaimant (20) pouvant être actionné au moyen de l'interrupteur (19) est disposé dans le carter de machine (4).

13. Dispositif de perçage selon une des revendications 1 à 12, **caractérisé en ce que** la douille filetée (13) est pourvue, dans son fond de douille tourné vers la tige d'accouplement (14), d'une ouverture non circulaire dans laquelle la tige d'accouplement s'engage par une section correspondante.

14. Dispositif de perçage selon une des revendications 1 à 13, **caractérisé en ce que** la broche de perçage (5) est conçue d'un seul tenant avec le corps de mandrin (6).

15. Dispositif de perçage selon une des revendications 4 à 14, **caractérisé en ce que**, en cas de dépassement d'un couple prédéfini, un limiteur de couple (29) est prévu pour déplacer l'interrupteur (19) vers la position permettant la position de perçage de la tige d'accouplement (14).

16. Dispositif de perçage selon la revendication 15, **caractérisé en ce que** le couple prédéfini est réglable.

17. Dispositif de perçage, composé d'une perceuse (2), comportant une broche de perçage (5) montée à rotation dans un carter de machine (4), et d'un mandrin (3), comportant un corps de mandrin (6), un cône de serrage (7) pouvant tourner coaxialement au corps de mandrin (6) et un porte-mors (8) dans lequel des mors de serrage (10) guidés dans des logements de guidage (9) sont montés de manière déplaçable radialement sur un entraîneur (11) qui s'engage par une partie filetée (12) dans une douille filetée (13) coaxiale à l'axe du mandrin et associée au corps de mandrin (6), le corps de mandrin (6) étant formé d'un seul tenant avec la douille filetée (13), la broche de perçage (5) étant réalisée sous la forme d'une broche creuse dans laquelle s'engage une tige d'accouplement (14) liée en rotation avec l'entraîneur (11), la tige d'accouplement (14) étant déplaçable entre une position de serrage couplée en rotation avec le carter de machine (4) et une position de perçage couplée en rotation avec la broche de perçage (5), la tige d'accouplement (14) comportant, à son extrémité éloignée axialement de la douille filetée (13), un disque d'accouplement (15), **caractérisé en ce que** la tige d'accouplement est appliquée, dans la position de serrage, contre le carter de machine (4) et, dans la position de perçage, contre la broche de perçage (5), et **en ce que** le disque d'accouplement (15) fait partie de la tige d'accouplement (14) et est déplaçable sur celle-ci entre la position de serrage et la position de perçage.
